Europäisches Patentamt

European Patent Office

Office européen des brevets

(11) Veröffentlichungsnummer: **0 246 595**

**A1**

(12) **EUROPÄISCHE PATENTANMELDUNG**

(21) Anmeldenummer: 87107204.7

(22) Anmeldetag: **18.05.87**

(51) Int. Cl.4: **H02K 7/18** , B60K 25/08

(30) Priorität: **20.05.86 DE 3616961**

(43) Veröffentlichungstag der Anmeldung:
**25.11.87 Patentblatt 87/48**

(84) Benannte Vertragsstaaten:
**AT BE CH ES FR GB GR IT LI LU NL SE**

(71) Anmelder: **Junker, Erwin**
**Talstrasse 78**
**D-7611 Nordrach/Baden(DE)**

(72) Erfinder: **Junker, Erwin**
**Talstrasse 78**
**D-7611 Nordrach/Baden(DE)**

(74) Vertreter: **Rost, Jürgen, Dipl.-Ing.**
**Patentanwälte Dipl.-Ing. Olaf Ruschke**
**Dipl.-Ing. Hans E. Ruschke Dipl.-Ing. Jürgen**
**Rost Dipl.-Chem. Dr. U. Rotter**
**Pienzenauerstrasse 2**
**D-8000 München 80(DE)**

(54) **Als Notstromaggregat dienende Vorrichtung.**

(57) Es wird eine Vorrichtung vorgeschlagen, die als Notstromaggregat dient. Dabei treiben die Antriebsräder (2) eines arretierten Kraftfahrzeuges ein vorzugsweise versenkt angeordnetes Rollenpaar (3, 4) an, welches die Funktion eines Stromerzeugers übernimmt.

Fig. 1

EP 0 246 595 A1

## Als Notstromaggregat dienende Vorrichtung

Die Erfindung betrifft eine als Notstromaggregat dienende Vorrichtung zum Erzeugen von elektrischer Energie, bei welcher ein ortsfestes Kraftfahrzeug einen ortsfesten Stromerzeuger antreibt.

Ein Einsatz einer solchen Vorrichtung ist beispielsweise dann wünschenswert, wenn aufgrund eines Ausfalls oder einer Störung des Energienetzes kein Strom zur Verfügung steht.

Im Sonderdruck aus "Siemens-Elektrodienst" 13 (1971) 7, S. 19 und 20 ist eine als Notstromaggregat dienende Vorrichtung beschrieben, bei welcher an die Zapfwelle eines Traktors ein ortsfester Generator angeschlossen ist. Der Generator ist seinerseits mit dem zu versorgenden Netzteil verbunden.

Es ist weiterhin aus dem Prospekt der Firma Schenk, Bestell-Nr. L 3026/3-20.868 (1968) sowie der DE-OS 33 47 182 bekannt, bei Kraftfahrzeug-Bremsprüfständen über Rollen einen Generator anzutreiben.

Die der Erfindung zugrundeliegende Aufgabe besteht darin, eine Vorrichtung der eingangs umrissenen Art so auszu bilden, daß zwischen Fahrzeug und Generator kein spezielles Kopplungselement erforderlich ist.

Diese Aufgabe wird erfindungsgemäß dadurch gelöst, daß die Antriebsräder eines Kraftfahrzeuges mit unterhalb der Fahrbahnfläche in einem Schacht abgestützten und drehbar gelagerten, die Funktion eines Stromerzeugers übernehmenden Rollenpaaren in Eingriff bringbar sind, deren Längsachsen zu der Achse der Antriebsräder parallel verlaufen und wobei das Fahrzeug in dieser Eingriffslage arretierbar ist.

Zweckmäßige Ausgestaltungen der erfindungsgemäßen Vorrichtung ergeben sich aus den Unteransprüchen.

Die wesentlichen Vorteile des vorgeschlagenen Notstromaggregates lassen sich folgendermaßen zusammenfassen.

Die Vorrichtung kann von einem Laien betätigt werden, sie ist technisch nicht kompliziert und arbeitet sicher. Schließlich kann auch die Vorrichtung nachträglich in bereits bestehende Garagen eingebaut werden.

Ein Ausführungsbeispiel der Erfindung wird nachfolgend anhand der beigefügten Zeichnung näher erläutert.

In der Zeichnung zeigen:

Fig. 1 eine teilweise geschnittene Ansicht einer Garage mit Pkw und Stromgenerator,

Fig. 2 eine der Fig. 1 ähnliche Ansicht mit einem Pkw mit Frontantrieb,

Fig. 3a und b in Draufsicht und Seitenansicht vier drehbar gelagerte Generatoren in Form von Rollen, wobei je ein Rollenpaar von einem Antriebsrad antreibbar ist,

Fig. 3c die Anlage im Ruhezustand,

Fig. 4 schematisch einen Teil eines Fahrzeuginnenraumes mit dort angeordnetem Regler,

Fig. 5 den Regler nach Fig. 4 in Zusammenwirken mit dem Motordrosselorgan.

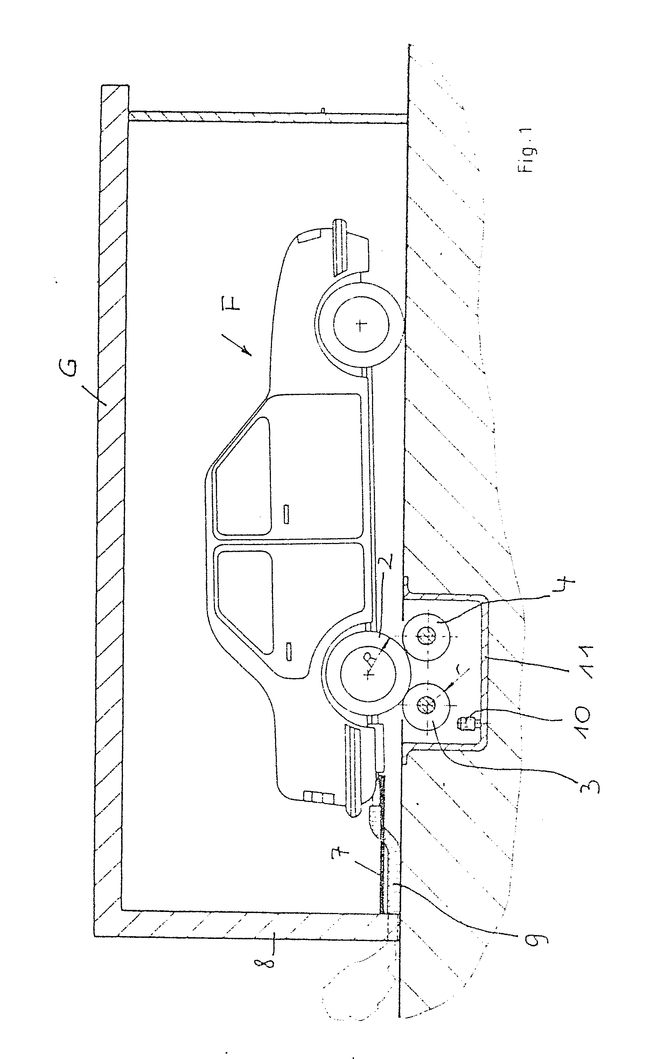

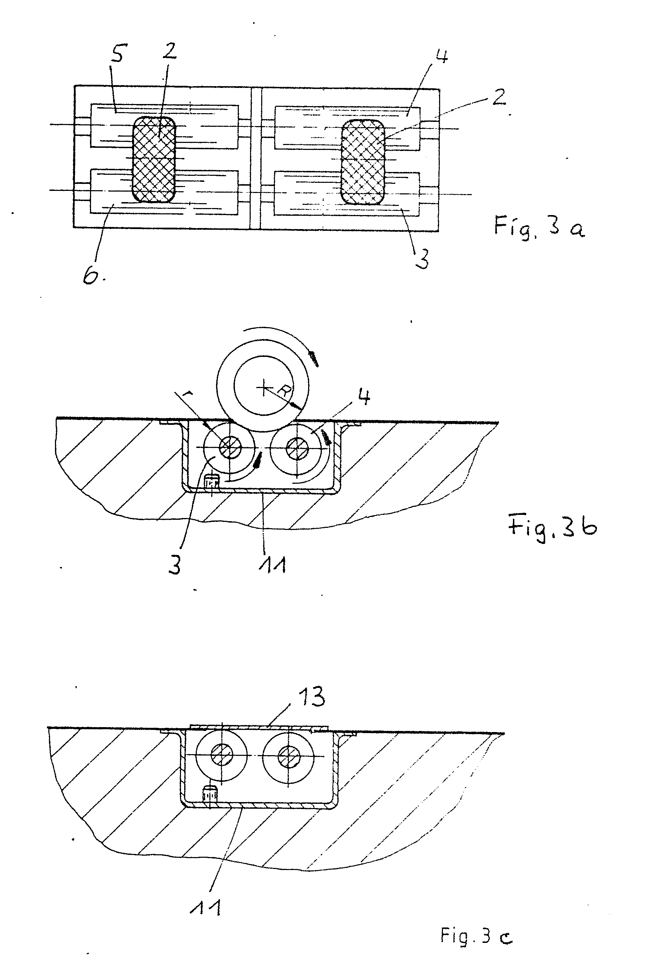

In Fig. 1 ist der Standort eines Fahrzeuges F in einer Autogarage G gezeigt. Das heckangetriebene Fahrzeug steht mit seinen Antriebsrädern 2 mit einem Radius R auf vier drehbar gelagerten Generatorrollen 3, 4; 5, 6 mit einem Radius r, welche in Fig. 3a in Draufsicht erkennbar sind.

Beim Betrieb des Fahrzeuges führen die Antriebsräder eine Drehbewegung aus, die auf die drehbar gelagerten Generatorrollen 3, 4; 5, 6 übertragen wird, welche in einem Schacht 11 angeordnet sind.

Zum Schutze des Fahrzeuges F gegen unbeabsichtigtes Wegrollen infolge Unterbrechung bzw. Blockierens der Generatorendrehbewegung ist das Fahrzeug F mittels einer fest verankerten Stange 7 in der Wand bzw. Mauer gesichert. Am Fahrzeug selbst wird hierzu die hintere Abschlepppöse verwendet.

Die beim Betrieb des Fahrzeuges auftretenden Abgase (Kohlenmonoxid) werden mittels eines Luftschlauches 9 ins Freie abgeleitet. Um die einwandfreie Funktionsfähigkeit der Generatoren zu gewährleisten, ist der Rollenschacht 11 mit einer selbsttätigen Ansaugpumpe 10 ausgestattet, welche alle angesammelten flüssigen Substanzen wie Öl, Wasser usw. abpumpt und somit die Generatoren vor Feuchtigkeit schützt.

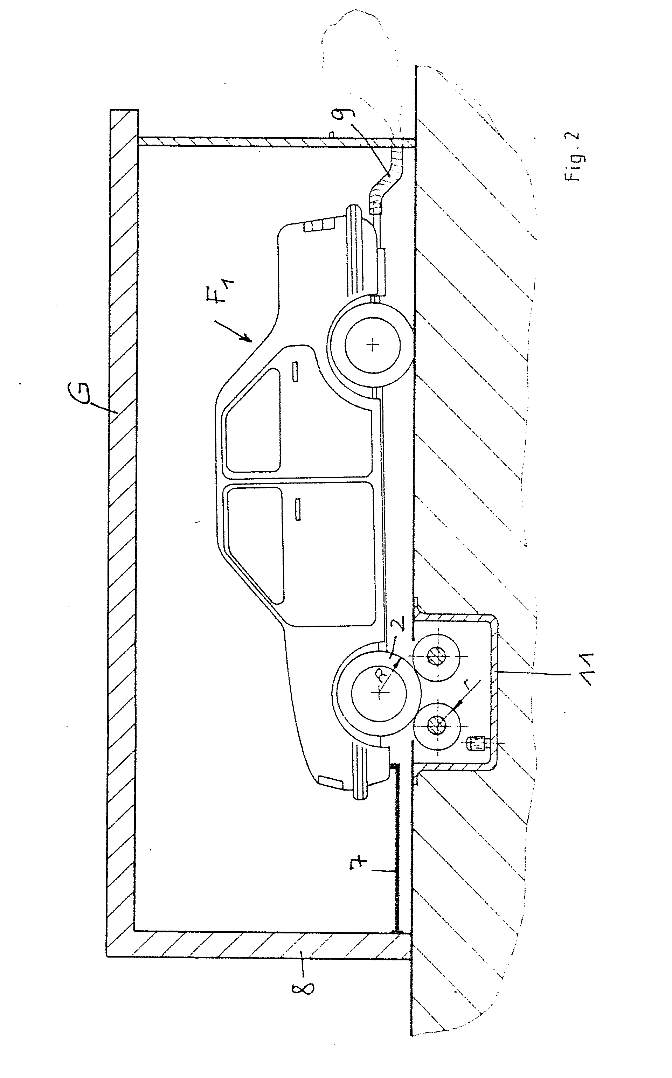

In Fig. 2 ist das gleiche Funktionsprinzip der Anlage wie in Fig. 1 gezeigt, wobei die Anlage mittels eines frontangetriebenen Fahrzeuges F. betreibbar ist.

Während in Fig. 3a die Anordnung der vier drehbar gelagerten Generatorrollen mit jeweils zugeordnetem Antriebsrad 2 dargestellt ist, wobei diese Rollen im Schacht so abgestützt sind, daß sie dem Druck des Fahrzeuges widerstehen, ist in Fig. 3b der Generatorrollenschacht mit dort angerodneten Rollen 3, 4 gezeigt.

Führt nun das angetriebene Rad 2 des Fahrzeuges (Radius = R) eine Drehbewegung aus, so überträgt sich diese aufgrund des Umfangsverhältnisses in einem grösseren Wert auf die Generatorenrollen (Radius = r). Je größer die Umfangsgeschwindigkeit des Antriebsrades 2 (Radius = R) wird, umso mehr steigt die Umfangsgeschwindigkeit der vier Rollen 3, 4, 5, 6.

Nach Fig. 3c ist die Vorrichtung in ihrer Ruhelage gezeigt. Aufgrund der versenkten Anordnung der vier Generatorrollen 3, 4, 5, 6 ist es möglich, durch eine Abdeckung mittels einer Platte 13 den Schacht zu versperren und so eine Unfallgefahr beim Überschreiten der Rollen zu vermeiden.

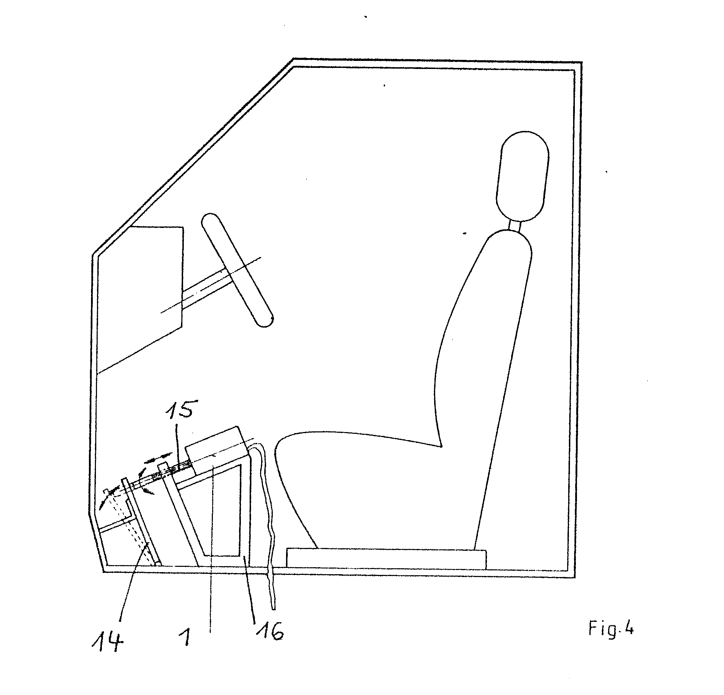

In Fig. 4 ist ein Teil des Fahrzeuginnenraumes, nämlich die Fahrerseite gezeigt. Die dort dargestellte Anordnung kann man ihrem Funktionsprinzip nach als "künstlichen Gasfuß" bezeichnen. Auf einem Ständer 16, der im Fußraum bzw. Pedalraum der Fahrerseite angebracht ist, befindet sich ein Regler 1. Seine Aufgabe ist es, über eine Längsbewegung die Betätigung des Gaspedales auszuführen. Hierzu wirkt er über eine Stange 15 direkt auf das Gaspedal 14 des Fahrzeuges ein.

Hier ist darauf zu verweisen, daß die Umfangsgeschwindigkeit der Generatorrollen nicht geändert werden darf, da die Frequenz des Stromes proportional zur Drehzahl des Generators ist. Es wird somit die Drehzahl konstant gehalten und das Antriebsmoment M an den Rollen geändert. Dies ist aus der Gleichung $M \cdot 2\pi f = P$ ersichtlich, d.h. um die Frequenz $f$ des Stromes nicht zu verändern, ist nur M variabel, woraus folgt, daß die Regelung der Leistung P am Fahrzeugantrieb erfolgt.

Zur Stromversorgung des Reglers 1 dient der 12 Volt-Anschluß des Zigarettenanzünders.

Die Steuerung des Reglers 1 erfolgt nach der Leistung. Alle Steuerungselemente befinden sich in einem Schaltschrank außerhalb des Fahrzeuges F bzw. $F_1$.

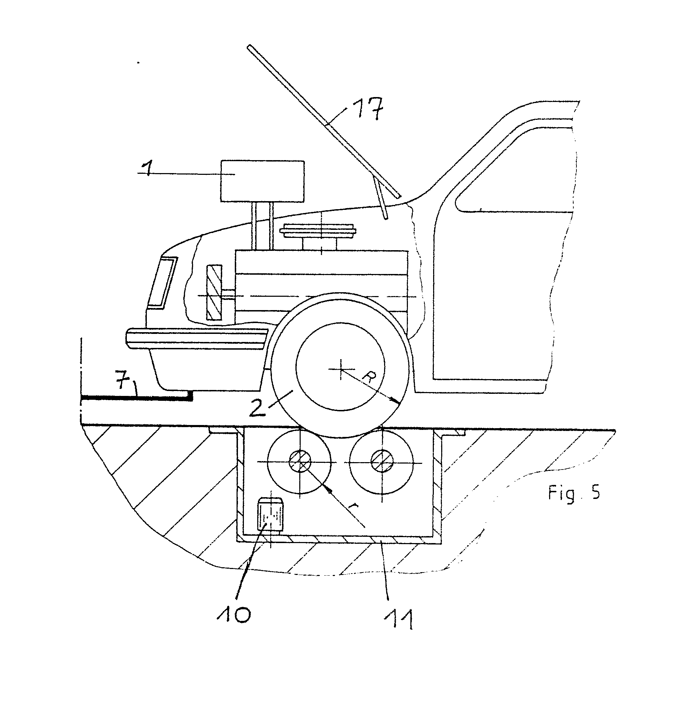

In Fig. 5 ist eine Alternative zu Fig. 4 gezeigt. Der Regler 1 wird in diesem Fall nicht im Innenraum des Fahrzeuges aufgestellt, sondern bei geöffneter Motorhaube 17 direkt auf den Betätigungshebel des Drosselorgans aufgesteckt.

Zur Stromversorgung des Reglers dient wiederum der 12-Volt Anschluß des Zigarettenanzünders.

## Ansprüche

1. Als Notstromaggregat dienende Vorrichtung zum Erzeugen von elektrischer Energie, bei welcher ein ortsfestes Kraftfahrzeug einen ortsfesten Stromerzeuger antreibt, dadurch **gekennzeichnet,** daß die Antriebsräder (2) eines Kraftfahrzeuges mit unterhalb der Fahrbahnfläche in einem Schacht (11) abgestützten und drehbar gelagerten, die Funktion eines Stromerzeugers übernehmenden Rollenpaaren (3, 4; 5, 6) in Eingriff bringbar sind, deren Längsachsen zu der Achse der Antriebsräder parallel verlaufen, und daß das Fahrzeug in dieser Eingriffslage arretierbar ist.

2. Vorrichtung nach Anspruch 1, dadurch **gekennzeichnet,** daß sich der mittels einer Platte (13) abdeckbare Rollschacht (11) innerhalb einer Garage (G) befindet, an deren einer Wand (8) das Kraftfahrzeug (F, $F_1$) mittels einer in der Wand (8) verankerten Stange (7) fixiert ist, dessen Abgase mittels eines Schlauches (9) ins Freie leitbar sind

3. Vorrichtung nach Anspruch 1, dadurch **gekennzeichnet,** daß der Rollenschacht (11) mit einer selbsttätigen Ansaugpumpe (10) ausgestattet ist.

4. Vorrichtung nach einem der vorhergehenden Ansprüche, dadurch **gekennzeichnet,** daß die die Umfangsgeschwindigkeit der Rollen bestimmende Laufgeschwindigkeit der Antriebsräder (2) änderbar ist.

5. Vorrichtung nach einem der Ansprüche 1-4, dadurch **gekennzeichnet,** daß zum Einstellen der Laufgeschwindigkeit der Antriebsräder ein Regler (1) vorgesehen ist, dessen Stromversorgung mit Hilfe des 12 Volt Anschlusses eines Zigarettenanzünders erfolgt.

6. Verfahren nach einem der Ansprüche 1-4, dadurch **gekennzeichnet,** daß der Regler (1) als künstlicher Gasfuß wirkend auf einem Ständer (16) im Bereich des Fußraumes der Fahrerseits vorgesehen ist und über eine Torsionsstange (15) mit dem Gaspedal des Pkw zusammenwirkt.

7. Vorrichtung nach einem der Ansprüche 1-4, dadurch **gekennzeichnet,** daß der Regler (1) bei geöffneter Motorhaube (17) direkt auf den Betätigungshebel des Drosselorgans aufgesteckt ist.

8. Vorrichtung nach einem der Ansprüche 4-7, dadurch **gekennzeichnet,** daß alle Steuerungselemente für den Regler (1) in einem Schaltschrank außerhalb des Fahrzeuges angeordnet sind.

Fig. 1

0 246 595

G

F₁

8

7

2

R

11

9

0 246 595

Fig. 2

Fig. 3 a

Fig. 3 b

Fig. 3 c

Fig. 4

Fig. 5

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (Int. Cl.4) |
|---|---|---|---|
| Y | DE-A-2 923 424 (KURZ) <br> * Seite 8, Zeilen 9-41; Seite 9, Zeilen 12-21 * | 1 | H 02 K 7/18 <br> B 60 K 25/08 |
| A | | 4-6,8 | |
| | --- | | |
| Y | CH-A- 86 911 (PLETSCHER) <br> * Seite 1, Zeilen 1-13; Figur 4 * | 1 | |
| | --- | | |
| A | BE-A- 336 578 (BAUMGÄRTEL) <br> * Seite 2, Zeilen 8-13 * | 2 | |
| | --- | | |
| A | US-A-2 716 728 (LESTER) <br> * Spalte 1, Zeilen 46-51 * | 2 | |
| | --- | | |
| A | DE-C- 356 356 (BIRO) <br> * Seite 2, Zeilen 93-101 * | 3 | RECHERCHIERTE SACHGEBIETE (Int. Cl.4) |
| | ----- | | B 60 K <br> H 02 K <br> E 04 H |

Der vorliegende Recherchenbericht wurde für alle Patentansprüche erstellt.

| Recherchenort <br> DEN HAAG | Abschlußdatum der Recherche <br> 29-07-1987 | Prüfer <br> STEINMETZ L.J.P. |
|---|---|---|